# FASCICULE DE BREVET EUROPEEN

(11) **EP 1 590 169 B1**
(45) Date de publication et mention de la délivrance du brevet: **09.08.2006**
(21) Numéro de dépôt: 04702657.0
(22) Date de dépôt: 16.01.2004
(51) Int. Cl.: B29D 30/16

(54) **APPAREIL DE FABRICATION D'UN RENFORCEMENT POUR PNEUMATIQUE, COMPORTANT UN DISPOSITIF POUR LE GUIDAGE DU FIL DE RENFORCEMENT, ET PROCEDE DE FABRICATION D'UN TEL RENFORCEMENT AU MOYEN DE CET APPAREIL.**
EINE MIT EINER DRAHTFÜHRUNGSEINRICHTUNG AUSGERÜSTETE VORRICHTUNG ZUR HERSTELLUNG VON VERSTÄRKUNGSELEMENTEN FÜR LUFTREIFEN UND EIN HERSTELLUNGSVERFAHREN UNTER VERWENDUNG EINER SOLCHEN VORRICHTUNG.
APPARATUS FOR PRODUCING A TIRE REINFORCEMENT PROVIDED WITH A DEVICE FOR GUIDING THE REINFORCING WIRE AND METHOD OF MANUFACTURING A TIRE REINFORCEMENT USING SUCH AN APPARATUS.

(30) Priorité: 23.01.2003 FR 0300753
(43) Date de publication de la demande: 02.11.2005
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: HINC, Henri, F-63360 Saint Beauzire (FR)
(74) Mandataire: Bauvir, Jacques
(86) Numéro de dépôt international: PCT/EP2004/000284
(87) Numéro de publication internationale: WO 2004/064887

(56) Documents cités:
- EP-A- 0 580 055
- EP-A- 1 122 057
- US-A- 3 082 140

## Description

### DOMAINE DE L'INVENTION

La présente invention concerne la fabrication des pneumatiques. Plus précisément, elle se rapporte à la mise en place de fils, pour constituer un renforcement du pneumatique. Plus particulièrement, elle propose des moyens aptes à fabriquer un tel renforcement sur une forme proche ou identique de la forme de la cavité interne du pneumatique, c'est à dire une forme sensiblement toroïdale, supportant l'ébauche d'un pneumatique pendant sa fabrication.

### ETAT DE LA TECHNIQUE

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une bobine de fil. Parmi ces procédés et appareils, la solution décrite dans la demande de brevet EP 1 122 057 est bien adaptée pour la réalisation de renforcements de carcasse sur un noyau rigide dont la surface extérieure correspond sensiblement à la forme de la cavité interne du pneumatique final. On y voit un appareillage dans lequel le fil, destiné à constituer un renforcement de carcasse, est posé en arceaux contigus sur un noyau rigide, par un mécanisme présentant au moins deux bras arrangés en cascade, décrivant un mouvement de va-et-vient autour du noyau de façon à poser progressivement un arceau à chaque aller et un arceau à chaque retour, avec intervention de presseurs appropriés pour appliquer les extrémités desdits arceaux au fur et à mesure sur le noyau rigide. Le noyau a été revêtu préalablement de caoutchouc cru selon l'architecture du pneumatique à fabriquer, ce qui présente la propriété intéressante de permettre de coller suffisamment les arceaux et de les maintenir en place au moins pour les besoins de la fabrication.

La dépose des fils sur le noyau est d'autant plus précise que l'oeilleton au travers duquel passe le fil s'approche le plus près possible du noyau au cours de la dépose. Dans certaines mises en oeuvre de cette invention, on est conduit à ajouter au moins un troisième bras pour mieux se rapprocher du noyau dans la zone de la base du bourrelet.

L'objectif de la présente invention est d'améliorer la précision de fonctionnement d'un système à bras oscillant, dont l'extrémité délivre un fil via un oeilleton ou via un orifice de sortie de fil au bout du bras, du genre de celui décrit dans la demande de brevet EP 1 122 057 , tout en permettant le fonctionnement des organes de dépose du fil à dés cadences importantes. L'objectif de l'invention est d'obtenir un bon contrôle de la trajectoire de pose du fil sur la forme servant de support de fabrication pour un pneumatique par une déviation appropriée du fil, sans devoir agir dans ce but sur les mouvements du système d'animation des organes de dépose et sur les mouvements de la forme.

### BREVE DESCRIPTION DE L'INVENTION

L'invention propose un appareil de fabrication d'un renforcement pour pneumatique, ledit appareil étant destiné à fabriquer un renforcement constitué à partir d'un fil, ledit appareil étant destiné à être utilisé en coopération avec une forme sensiblement toroïdale, rotative autour d'un axe de rotation, ayant un plan sensiblement médian perpendiculaire audit axe de rotation, sur laquelle on construit progressivement ledit renforcement en déposant des arceaux dudit fil selon une trajectoire souhaitée pour ledit fil à la surface de ladite forme, ledit appareil comprenant :
- un organe de dépose du fil dans lequel le fil peut coulisser ;
- un mécanisme d'animation pour transporter ledit organe de dépose selon un mouvement cyclique sensiblement compris dans un plan de mouvement, en va-et-vient, le mouvement cyclique contournant un espace central destiné à accueillir ladite forme, le mouvement amenant l'organe de dépose en cycles successifs au voisinage de chacune des extrémités souhaitées pour le fil dans ladite trajectoire, le mécanisme d'animation comportant au moins un bras principal supportant ledit organe de dépose ;
- des presseurs proches de chaque extrémité de ladite trajectoire, pour appliquer le fil sur la forme au moins auxdites extrémités ;
caractérisé en ce qu'il comprend au moins une paire de déflecteurs disposés en vis à vis, les déflecteurs étant chacun terminé par une lèvre, les lèvres délimitant une fente, ladite au moins une paire de déflecteurs coopérant avec un seul côté, axialement, de ladite forme, les déflecteurs étant disposées de façon à pouvoir recevoir le fil amené par l'organe de dépose du côté opposé à l'espace central et le guider d'un côté de ladite forme selon une trajectoire définie par le contour des lèvres et le laisser passer entre les lèvres et vers l'espace central.

Le rôle des déflecteurs est de faciliter un positionnement précis du fil par rapport à la forme de fabrication, notamment en rapprochant de la forme la fente qui constitue le seul chemin par lequel le fil peut s'échapper des déflecteurs. Or, de la poursuite du mouvement du mécanisme d'animation; résulte une certaine tension du fil entre la forme sur laquelle il est collé et l'organe de dépose, en général un oeilleton au travers duquel le fil est enfilé.

De préférence, les déflecteurs sont montés sur un mécanisme de positionnement, ce qui permet de leur conférer de petits mouvements relatifs par rapport à la forme, en synchronisme avec la rotation de celle-ci, de façon à améliorer encore la précision de dépose du fil par le contrôle d'un degré de liberté de positionnement supplémentaire. De préférence, l'appareil comporte deux paires de déflecteurs coopérant avec chacune un seul côté, axialement, de ladite forme. Lorsqu'il y a deux paires de déflecteurs, une pour chaque côté, alors nécessairement chacune des paires de déflecteurs est supportée par son propre mécanisme de positionnement, ce qui permet de guider rigoureusement le fil dans chacun des flancs et, notamment, d'utiliser l'un des déflecteurs comme jauge garantissant un certain écartement entre tronçons de fil adjacents dans les flancs. Il est en effet tout particulièrement important de bien maîtriser le positionnement des fils de carcasse dans le flanc et à l'épaule du pneumatique.

L'invention s'étend aussi à un procédé de fabrication d'un renforcement pour pneumatique, à partir d'un fil délivré en continu et à la demande par un distributeur de fil approprié, utilisant une forme de révolution ayant un axe de rotation et sur laquelle on construit progressivement ledit renforcement, comprenant une étape permettant de déposer sur la forme une couche de caoutchouc cru au moins dans les zones d'ancrage d'extrémités dudit renforcement, et dans lequel on anime la forme d'une rotation à vitesse toujours non nulle et, le fil provenant du distributeur étant enfilé dans un organe de dépose, en synchronisme avec la rotation de la forme, on fait décrire à l'organe de dépose dans lequel le fil est enfilé un mouvement alterné de va-et-vient contournant la forme de façon à poser progressivement le fil sur la forme, le mouvement alterné de va-et-vient faisant, dans une phase du mouvement allant vers la zone d'ancrage à la base dudit flanc, passer l'organe de dépose par devant un dispositif de guidage comportant deux déflecteurs adjacents séparés par une fente, le dispositif de guidage étant disposé en regard d'au moins une épaule, le fil passant au travers de la fente et étant temporairement pressé contre la forme dans ladite zone d'ancrage, le mouvement alterné de va-et-vient faisant passer à nouveau l'organe par devant le dispositif de guidage dans une phase du mouvement revenant depuis ladite zone d'ancrage, le fil passant au travers de la fente après chaque passage, le dispositif de guidage étant déplacé circonférentiellement en synchronisme avec la rotation de la forme afin de maîtriser la trajectoire finale que fait le fil une fois déposé sur ladite forme, et on répète les mouvements indiqués ci-dessus jusqu'à déposer le nombre voulu de tronçons à la surface de la forme, selon la trajectoire souhaitée pour le fil à la surface de la forme.

Le lecteur est invité à consulter la demande de brevet EP 1 122 057 précitée car la présente invention propose un complément à ce qui y est décrit. Cette référence à la technique antérieure n'est cependant pas limitative, l'invention ayant un champ d'application plus large. On désignera l'oeilleton ou l'orifice de sortie du fil ou tout organe équivalent par « organe de dépose », celui-ci étant mis en mouvement par un système d'animation comprenant au moins un bras oscillant, imprimant à son extrémité délivrant le fil un « trajet » survolant et contournant la forme de fabrication du pneumatique. Un système approprié pour l'animation de l'organe de dépose est par exemple le système à bras oscillants décrit dans la demande de brevet EP 1 122 057 précitée. Ledit système approprié fait parcourir à l'organe de dépose du fil et au moins au bras le supportant directement un mouvement sensiblement compris dans un plan -appelé dans la suite le plan de mouvement- perpendiculaire à l'axe géométrique de rotation du ou des bras.

Quant aux dispositifs presseurs, ils doivent être positionnés de façon appropriée pour jouer le rôle décrit dans la demande de brevet EP 0 580 055 précitée. Rappelons qu'ils peuvent comporter tous les deux une fourche et un marteau, mobiles entre une position reculée (position éloignée de la forme), et une position avancée (position en contact avec la forme). Ils permettent la formation d'une boucle et la dépose de celle-ci contre la forme.

Avant de poursuivre la description de l'invention, rappelons tout d'abord que, comme dans la demande de brevet EP 1 122 057 déjà citée, le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non. Dans le présent mémoire, on emploie le terme "arceau" pour désigner un tronçon de fil allant d'un point singulier à un autre dans l'armature de renforcement. L'ensemble de ces arceaux disposés sur tout le pourtour du pneumatique constitue ensemble le renforcement proprement dit. Un arceau au sens défini ici peut faire partie d'une carcasse, ou d'un renfort de sommet, ou de tout autre type de renfort. Ces arceaux peuvent être individualisés par une coupe du fil en cours de pose, ou tous reliés entre eux dans le renforcement final, par exemple par des boucles.

Fondamentalement, l'invention traite de la dépose en continu d'un fil de renforcement, dans une configuration aussi proche que possible de la configuration dans le produit final. Le fil est délivré à la demande par un distributeur approprié comportant par exemple une bobine de fil et le cas échéant un dispositif de contrôle de la tension du fil extrait de la bobine. L'appareil de fabrication d'un renfort à partir d'un seul fil coopère avec une forme (noyau rigide ou une membrane armée) sur laquelle on fabrique le pneumatique. Il importe peu que le renforcement soit fabriqué en plusieurs rotations successives dé la forme par devant les organes de pose décrits, avec coupe du fil ou non entre deux rotations successives.

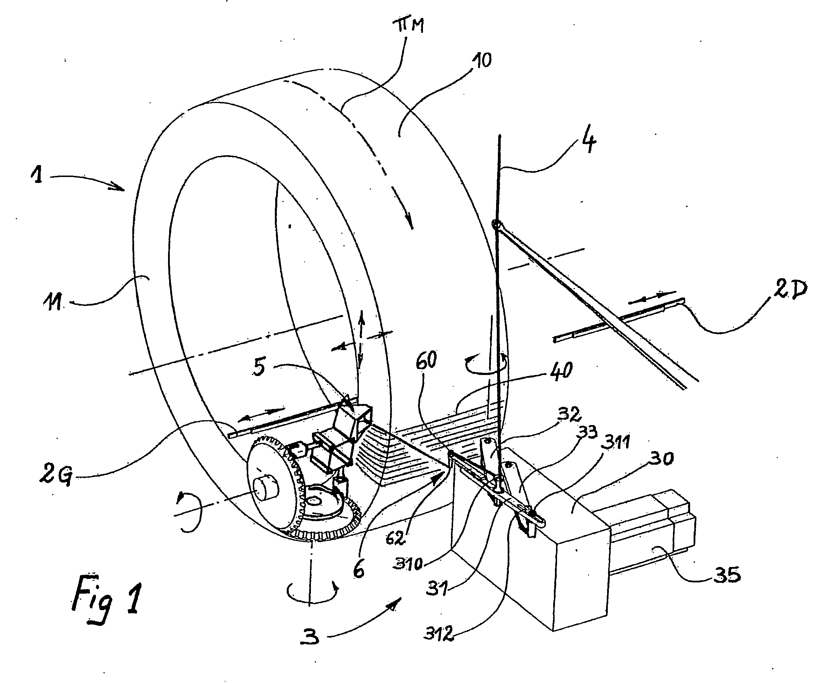

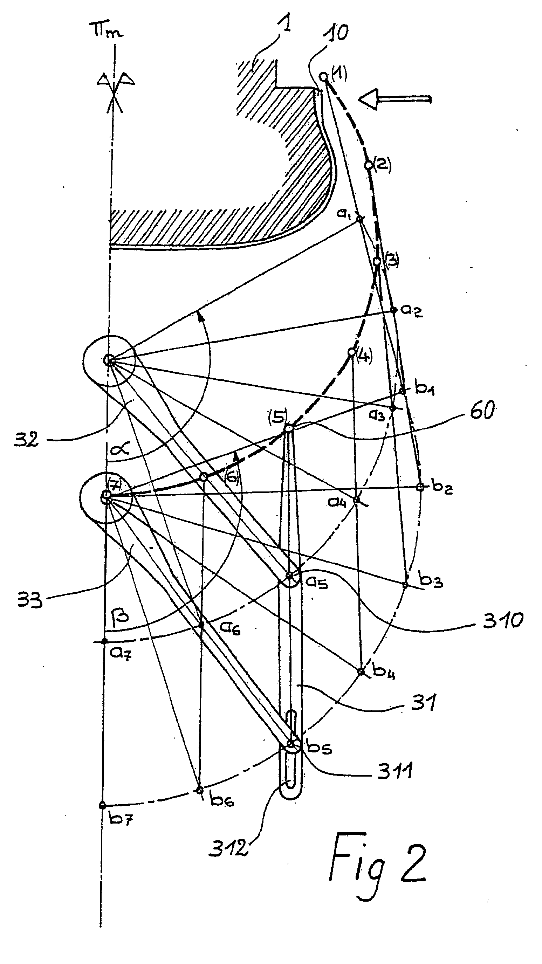

Lorsque l'on définit des positions, des directions ou des sens avec les mots "radialement, axialement, circonférentiellement", ou lorsque l'on parle de rayons, on prend pour repère la forme sur laquelle on fabrique le pneumatique, ou le pneumatique par lui-même. L'axe géométrique de référence est l'axe de rotation de la forme. Le plan médian π_{M} est un plan perpendiculaire à l'axe de rotation de la forme, visible par exemple à la figure 1. Le plan médian π_{R} est le plan contenant l'axe de rotation de la forme ; c'est par exemple le plan de la figure 2. On emploie le terme « portion » pour désigner le chemin du fil entre l'endroit où il quitte l'organe de dépose et l'endroit où il rejoint la surface de la forme.

En outre, les organes de pose du fil décrits ici permettent aussi de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il ne s'agit pas de cette variation dont il est question ici, mais bien d'un pas variable à un rayon donné. Il suffit pour cela de, sans changer la cadence de travail de l'organe de dépose, faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

### BREVE DESCRIPTION DES FIGURES

La suite de la description permet de bien faire comprendre tous les aspects de l'invention, en s'appuyant sur les figures suivantes :
La figure 1 est une perspective schématique montrant un mode de réalisation d'un appareil selon l'invention ;
La figure 2 explique le fonctionnement d'un mécanisme de l'appareil représenté à la figure 1 ;
La figure 3 est un agrandissement d'une partie de l'appareil représenté à figure 1, pris à un stade ultérieur du fonctionnement ;
La figure 4 est un agrandissement montrant plus en détails un organe de l'appareil ;
La figure 5 illustre l'intervention d'un organe spécifique de la présente invention ;
La figure 6 montre un renfort de carcasse obtenu avec certains appareils de l'art antérieur ;
La figure 7 montre un renfort de carcasse obtenu avec l'invention.

### DESCRIPTION DU MEILLEUR MODE DE REALISATION DE L'INVENTION

A la figure 1 (ainsi que d'ailleurs pour tous les exemples décrits, sans toutefois que ceci soit limitatif), la forme est un .noyau 1 (rigide et démontable) définissant la géométrie de la surface intérieure du pneumatique. Celui-ci est revêtu de caoutchouc 10 (voir figure 2), par exemple d'une couche de gomme d'étanchéité à base de caoutchouc butyl, et d'une couche de gomme assurant l'ancrage des fils de carcasse sur le noyau pendant la fabrication, puis l'enrobage de ceux-ci dans le pneu vulcanisé. Le caoutchouc 10 recouvrant le noyau 1 permet de retenir un fil 4 sur le noyau 1 au fur et à mesure de sa dépose par un organe de dépose 6, grâce à un effet de collage. L'organe de dépose illustrant l'invention est un oeilleton 60 au travers duquel le fil 4 est enfilé. Bien entendu, le noyau 1 est entraîné en rotation par tout dispositif convenable, non représenté.

La présente invention utilise un mécanisme d'animation 3 de l'oeilleton 60 comportant des bras multiples, fort comparable à ce qui est décrit dans la demande de brevet EP 1 122 057. Il s'en distingue en ce qu'il est possible d'approcher l'oeilleton 60 très près du noyau 1 sans recourir à trois bras en série, donc sans devoir commander le mouvement du troisième des bras en cascade arrangés en série. L'espace dans lequel travaille le mécanisme d'animation a typiquement un plan sensiblement médian perpendiculaire audit axe de rotation qui, notamment dans les applications de l'invention à la construction de carcasses symétriques axialement et continues d'un bourrelet à l'autre, correspond sensiblement au plan de symétrie médiane du noyau 1.

A la figure 1, on voit le mécanisme d'animation 3 à bras multiples monté sur une platine 30. Le mécanisme d'animation 3 à bras multiples comprend un bras principal 31 portant directement l'oeilleton 60 à son extrémité. L'oeilleton 60 constitue dans tous les exemples décrits ici la matérialisation de l'organe de dépose du fil 4 (sans que ceci soit limitatif). Rappelons que le mécanisme d'animation 3 à bras multiples remplit la fonction remplie par le mécanisme à chaîne dans la demande de brevet EP 0 580 055, et que les dispositifs presseurs 2G et 2D sont positionnés de façon appropriée pour jouer le rôle décrit dans la demande de brevet EP 0 580 055. Au moyen d'un presseur, on forme une boucle avec le fil et on plaque la boucle contre la forme à chaque extrémité de la trajectoire finale.

L'oeilleton 60 est similaire à ce qui a déjà été décrit dans la demande de brevet EP 1 122 057. Il comporte un orifice de sortie 62 qui décrit un mouvement dans ledit plan de mouvement de l'organe de dépose. Il convient de soigner la réalisation des rebords de l'orifice 62 pour ne pas blesser le fil 4, car la portion du fil en sortie de celui-ci se dispose généralement sensiblement dans le plan de mouvement, c'est à dire dans un plan qui est perpendiculaire aux parois de l'oeilleton 60. En variante, on peut orienter l'oeilleton de façon à se rapprocher de l'orientation moyenne du fil à la sortie de l'oeilleton.

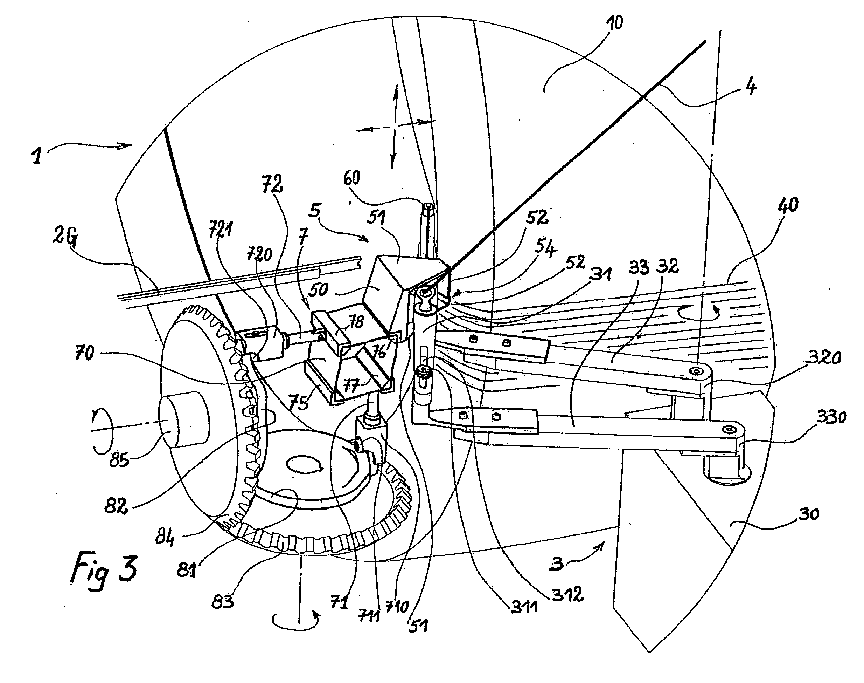

Le bras principal 31 est monté sur la platine 30 au moyen d'un bras auxiliaire avant 32 et d'un bras auxiliaire arrière 33. Le bras auxiliaire avant 32 est monté sur un arbre 320 et le bras auxiliaire arrière 33 est monté sur un arbre 330 (voir figure 3). Le bras principal 31 est monté sur le bras auxiliaire avant 32 au moyen d'un axe 310 disposé au centre géométrique de rotation, formant articulation entre le bras principal 31 et le bras auxiliaire avant 32. L'axe 310 est surmonté d'un chas dans lequel le fil 4 est enfilé. L'axe 310 est par ailleurs monté dans la partie centrale du bras principal 31. Le centre instantané de rotation du bras principal 31 est donc situé à l'extrémité du bras auxiliaire avant 32. Une lumière 312 est aménagée sur le bras principal 31. Ladite lumière 312 est située du côté du centre géométrique de rotation qui est opposé à l'oeilleton 60. Un téton 311 est monté à l'extrémité du bras auxiliaire arrière 33. Le téton 311 traverse la lumière 312 du bras principal 31 afin de pouvoir guider le bras principal 31.

Dans la disposition décrite dans la demande de brevet EP 1 122 057, le mécanisme d'animation à bras arrangés en cascade formait un parallélogramme (arbres 31, 32 et 34), les arbres 31 et 34 étaient d'égale longueur et avaient des mouvements nécessairement identiques ; quant au bras 32 porté par les bras 31 et 34, il décrivait un mouvement tout en restant toujours parallèle à lui-même (toutes les références soulignées et citées en début de ce paragraphe renvoient à la demande de brevet EP 1 122 057). Tout au contraire, dans la présente invention, grâce à l'installation d'une fonction de came et suiveur de came matérialisée par la lumière 312 creusée à une extrémité du bras principal 31 et le téton 311, le bras auxiliaire avant 32 et le bras auxiliaire arrière 33 peuvent être de longueurs différentes (on vise ici la longueur fonctionnelle mesurée entre le centre de rotation du bras auxiliaire considéré et le téton 311 ou l'axe 310), et/ou les bras auxiliaires avant 32 et arrière 33 peuvent avoir des mouvements d'oscillation d'ampleurs différentes. Fonctionnellement, l'invention permet de faire en sorte que, au cours de son mouvement, le bras principal 31 ne reste pas parallèle à lui-même. Il peut prendre une certaine inclinaison par rapport au plan médian π_{M}, comme montré notamment à la figure 2, ce qui permet de rapprocher l'oeilleton 60 du bourrelet du futur pneumatique, même dans le cas où la forme de fabrication est plus étroite à hauteur du bourrelet que à mi flanc.

Le choix du degré d'inclinaison, c'est à dire de rapprochement de la zone du futur bourrelet, est obtenu en jouant sur les longueurs respectives des bras auxiliaires et/ou sur les amplitudes respectives des mouvements oscillatoires des bras auxiliaires. Aux figures 1 et 2, l'illustration montre une solution où les arbres auxiliaires 32 et 33 ont des mouvements légèrement différents. Lesdits bras auxiliaires n'effectuent pas de rotation continue, mais ils oscillent, chacun dans des limites (différentes) d'un arc inférieur à 360°, les valeurs précises dépendant de la constitution exacte du mécanisme d'animation à bras multiples 3 et de l'application visée. Les arbres 320 et 330 sont liés entre eux par un mécanisme interne à la platine 30 et réalisé de telle sorte que l'arbre 320 peut osciller selon une amplitude par exemple d'environ 240° alors que l'arbre 330 peut osciller selon une amplitude par exemple d'environ 220°. Les deux arbres sont commandés par un même moteur 35.

La figure 2 représente de façon schématique les mouvements du mécanisme d'animation 3 à bras multiples. On voit le bras principal 31, le bras auxiliaire avant 32 et le bras auxiliaire arrière 33. La courbe en traits interrompus épais portant les repères (1), (2), (3), (4), (5), (6) et (7) représente le mouvement de l'oeilleton 60. La courbe en traits d'axe portant les repères a1, a2, a3, a4, a5, a6 et a7 représente le mouvement dans l'espace de l'axe 310, c'est-à-dire aussi le mouvement dans l'espace du centre de rotation du bras principal 31. Enfin, la courbe portant les repères b1, b2, b3, b4, b5, b6 et b7 représente le mouvement dans l'espace du téton 311. On voit bien à la figure 2 que les bras auxiliaire avant 32 et auxiliaire arrière 33 sont d'égale longueur (c'est seulement un cas particulier, ce n'est pas obligatoire). Comme l'amplitude de leur mouvement n'est pas identique, cela va provoquer une inclinaison variable du bras principal 31.

Le mécanisme est monté de telle façon qu'il existe une phase du mouvement dans laquelle les bras auxiliaires sont alignés exactement sur le plan π_{M}. Si l'axe 310 est au point a7 et le téton 311 est au point b7 (ce n'est pas la position représentée à la figure 2), alors le bras principal 31 sera disposé exactement sur l'axe de symétrie de la figure, et exactement aligné avec les bras auxiliaires avant 32 et arrière 33. Puisque l'amplitude du mouvement du bras auxiliaire arrière est légèrement inférieure à l'amplitude du mouvement du bras auxiliaire avant, au fur et à mesure que les bras auxiliaires avant 32 et arrière 33 tournent, à partir de leur position dans laquelle ils étaient confondus avec l'axe de symétrie de la figure, pour rejoindre la position extrême de leur mouvement d'oscillation, dans un premier temps, le bras principal 31 va s'incliner par rapport à l'axe de symétrie de la figure de telle façon que l'oeilleton 60 s'écarte par rapport à l'axe de symétrie de la figure légèrement plus que l'axe 310 et plus encore que l'endroit de la lumière 312 où se trouve le téton 311.

Puis il existe une position intermédiaire des bras auxiliaires avant 32 et arrière 33 pour laquelle le bras principal 31 est à nouveau exactement parallèle au plan de symétrie de la figure 2. Enfin, lorsque les bras auxiliaires avant 32 et arrière 33 se rapprochent de la limite d'oscillation, le bras principal 31 s'incline de telle façon que l'oeilleton 60 est plus proche de l'axe de la figure que l'axe 310 et plus proche encore que le téton 311. En choisissant correctement les amplitudes relatives des mouvements des bras auxiliaires avant 32 et arrière 33, on peut faire en sorte que l'oeilleton 60 se dispose à un endroit extrêmement proche du bourrelet du futur pneumatique.

Le lecteur pourra trouver tous les détails de construction d'un mécanisme d'animation à bras multiples dont un bras comporte une lumière dans la demande de brevet FR2002/15307. La présente description ne reprend que certains aspects utiles à l'intelligence de la présente invention, sans que la sélection des aspects décrits puisse avoir un quelconque effet limitatif.

Le mécanisme d'animation 3 décrit ci-dessus permet de faire passer l'oeilleton 60 au travers d'un anneau de guidage 5, formant déflecteurs séparés par une fente 54 pour laisser échapper le fil 4.

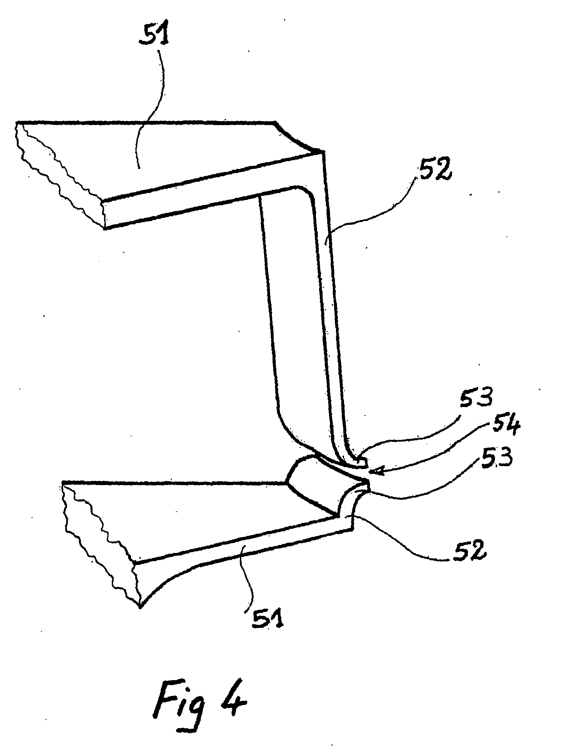

Le mouvement des organes de pose du fil apparaît tout particulièrement bien à la figure 3, et l'anneau 5 est illustré en détails à la figure 4.

L'anneau 5 comporte une base 50 et deux parois latérales 51. Les deux parois latérales 51 sont solidaires de la base 50 et disposées de part et d'autre de celle-ci. Un déflecteur 52 est solidaire de chacune des parois latérales. Les déflecteurs sont disposés à l'extrémité de celles-ci opposée à la base. Les deux déflecteurs 52 sont orientées l'une vers l'autre et se terminent chacune par une lèvre 53, les lèvres étant de formes semblables et opposées. La fente 54 est délimitée par les lèvres 53 des déflecteurs 52. Chacune des lèvres 53 est incurvée et s'éloigne progressivement de la base 50, de façon à créer une surface de glissement guidant le fil 4 vers la fente 54. De préférence, chacune des lèvres 53, ou plus précisément l'extrémité de celles-ci, est sensiblement comprise dans un plan, dans la mesure où l'on souhaite déposer des arceaux 40 de fil selon une trajectoire elle-même comprise dans un plan.

En outre, afin de favoriser un guidage rigoureux du fil 4 jusqu'à la surface du noyau 1, il est souhaitable que les lèvres 53 épousent l'allure de la surface du noyau 1. C'est pourquoi, de préférence, chacune des lèvres 53 présente une allure parallèle à la surface de la forme sur laquelle on construit le pneu, lorsque l'on considère cette forme au niveau correspondant au flanc du futur pneu.

A la figure 2, on a indiqué par un secteur D l'espace dans lequel chacun des déflecteurs se développe préférentiellement. Ainsi, de préférence, chacun des déflecteurs est disposé radialement au delà de l'équateur E de la forme 1 avec laquelle il est destiné à coopérer. De même, de préférence, chacun des déflecteurs est disposé axialement d'un côté dudit plan médian π_{M} de la forme 1 avec laquelle il est destiné à coopérer. En outre, de préférence, chacune des lèvres est sensiblement comprise dans un plan (c'est ici un plan radial, c'est à dire le plan de la figure 2). Pour rappel, l'équateur E correspond au point de largeur maximale de la forme 1. On peut encore remarquer que chacun des déflecteurs est de préférence disposé en regard des épaules de la forme 1 avec laquelle il est destiné à coopérer.

On n'a représenté qu'une paire de déflecteurs en illustrant notamment à la figure 2 une moitié axiale de la forme 1 et du parcours dans l'espace du mécanisme d'animation 3 à bras multiples. On sait par ailleurs que la plupart des pneus sont symétriques. Dans ce cas, l'homme du métier pourra sans difficulté particulière installer des organes identiques ou comparables dans l'autre moitié axiale. Mais bien entendu l'invention n'est nullement limitée à des appareils symétriques ou quasi symétriques par rapport à un plan médian π_{M}. Les tronçons de fils pourraient être installées entre un bourrelet et un bord de la zone de bande de roulement du pneu par exemple si la carcasse est en fait réalisée par deux demi-carcasses. Il peut être utile là encore de guider le fil entre les extrémités de la trajectoire de dépose par les moyens enseignées par la présente invention.

Un anneau 5 tel que décrit ci-dessus peut être positionné fixe dans l'espace, juste en regard du flanc 11 du noyau 1, afin de guider rigoureusement le fil 4 même lorsque l'appareil fonctionne à des cadences de pose très élevées. L'anneau de guidage 5 est positionné et orienté par rapport au bras principal de façon à ce que celui-ci traverse l'anneau au cours de son mouvement cyclique. Ainsi, même dans une mise en oeuvre fort simple, l'invention permet d'améliorer la qualité de réalisation des pneus, la constance du fonctionnement au cours du temps. En bref, cela permet une grande robustesse industrielle.

L'illustration de l'invention fait toujours apparaître des moyens permettant de faire varier le positionnement dans l'espace de l'anneau de guidage 5. On peut distinguer plusieurs versions, selon le niveau de sophistication : soit on agit seulement sur le positionnement circonférentiel de la fente 54 par rapport au noyau 1, soit on fait varier la proximité de l'anneau de guidage 5 par rapport au noyau 1, ou les deux. La suite décrit un support 7 associé à des moyens imposant un positionnement variable de l'anneau de guidage 5 permettant le niveau le plus élevé de sophistication, sans que ceci ne soit limitatif.

On voit en particulier à la figure 3 que la base 50 de l'anneau 5 est montée sur un support 7. Ce support 7 est formé par quatre parois planes parois et flexibles 70. Ces parois planes flexibles 70 sont reliées par quatre cornières 75, 76, 77 et 78 et sont agencées en quadrilatère si l'on considère ce support en coupe par un plan parallèle à l'axe de rotation du noyau 1. La cornière 75 sert de référence et est fixe dans l'espace. Elle est reliée au bâti de l'appareil, sans que la façon de la relier ait été montrée au dessin afin de ne pas le surcharger. L'anneau 5 est fixé rigidement sur la cornière 76 diamétralement opposée à la cornière 75 de référence.

On voit un premier vérin 71 monté dans une chemise 710 fixe dans l'espace (La chemise 710 est reliée au bâti de l'appareil d'une façon qu'il est inutile de représenter). On voit un deuxième vérin 72 monté dans une chemise 720 fixe dans l'espace (La chemise 720 est reliée au bâti de l'appareil d'une façon qu'il est inutile de représenter). Chacun des premiers et deuxième vérins 71 et 72 est relié d'une part à un galet 711 et respectivement 721 et d'autre part aux cornières 77 et 78 diamétralement opposées et situées sur la diagonale ne comprenant pas la cornière 75.

Chacun des galets 711 et 721 coopère avec une came 81 et respectivement une came 82. Chacune des deux cames est montée sur une roue dentée 83, respectivement 84, les deux roues dentées étant montées rotatives dans chacune un palier fixe dans l'espace. Un ressort de rappel, non représenté, tend en permanence à repousser les galets 711 et 721 contre respectivement les cames 81 et 82. Un arbre 85 est accouplé à l'une des roues dentées et est entraîné en rotation de façon appropriée pour commander le mouvement des premier et deuxième vérins 71 et 72, via le mouvement des cames 81 et 82.

Le premier vérin 71 est ainsi capable d'imprimer une translation perpendiculaire au plan contenant les lèvres 52, c'est à dire une translation perpendiculaire au plan de mouvement. Le second vérin 72 est ainsi capable d'imprimer une translation parallèle au plan de mouvement, c'est à dire ici parallèle à l'axe de rotation du noyau 1.

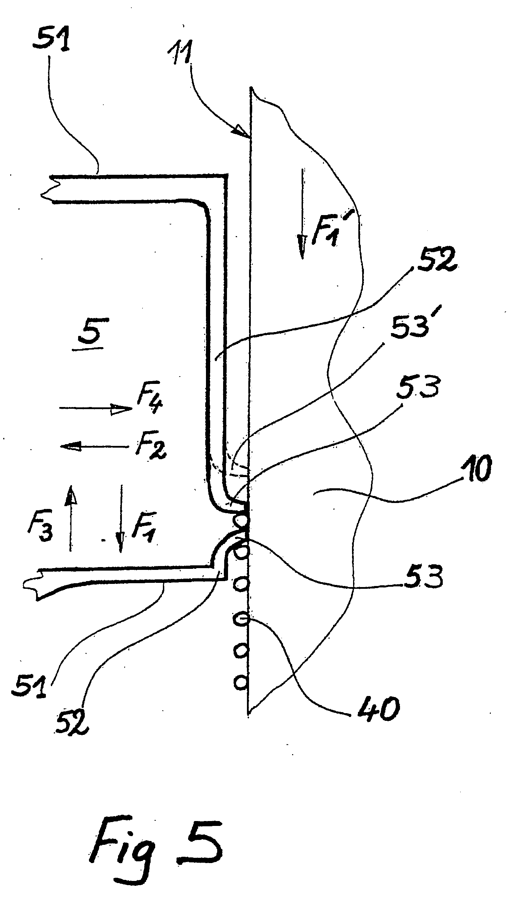

A la figure 5, on a représenté plus en détail l'intervention de l'anneau de guidage. On rappelle que le noyau 1 est en rotation continue dans le sens de la flèche F1'. Des tronçons 40 on déjà été déposés sur le noyau 1. Dans une phase du fonctionnement, l'anneau 5 est dans la position représentée en traits continus. Les lèvres 53 sont très porches de la couche de caoutchouc 10 dont est revêtu le noyau 1. L'anneau 5 est translaté perpendiculairement (voir flèche F1) au plan du mouvement décrit par l'oeilleton 60, de façon à suivre le mouvement du noyau 1 symbolisé par la flèche F1'. A un certain moment, le fil 4 traverse la fente 54. Ensuite, l'anneau 5 est éloigné du noyau 1 comme représenté par la flèche F2, tout en poursuivant le mouvement symbolisé par la flèche F1 de façon à se dégager du fil 4 juste posé sur le noyau sans le déplacer par rapport au noyau 1. Ensuite l'anneau 5 est déplacé selon la flèche F3 (mouvement parallèle au flanc 11 du noyau 1, puis l'anneau est approché du noyau 1 comme représenté par la flèche F4, puis il reprend son mouvement F1 d'accompagnement du noyau en attendant que le fil traverse à nouveau la fente 54 lors de la dépose du tronçon 40 suivant.

Lorsqu'il y a deux paires de déflecteurs, une pour chaque côté, à la lumière de l'explication précédente, on comprend que l'exécution des mouvements enseignés, notamment les mouvements F2 et F4 est facilité si chacune des paires de déflecteurs est supportée par son propre mécanisme de positionnement. En outre, on voit bien dans la configuration illustrée par la figure 5 que l'un des déflecteurs est utilisé comme jauge garantissant un certain écartement entre tronçons de fil adjacents dans les flancs.

A partir de ces explications, l'homme du métier pourra tracer sans peine les cames 81 et 82 permettant d'imprimer aux vérins 71 et 72 les mouvements nécessaires. Bien entendu, le système à cames et à galets destinés à suivre le profil des cames n'est qu'une des multiples façons de commander le mouvement de l'anneau de guidage 5. On pourrait envisager de nombreuses autres commandes, mécaniques ou électriques.

L'appareil est commandé par un contrôleur (non représenté) actionnant un système de motorisation (dont on voit par exemple le moteur 35) commandant en synchronisme la rotation de la forme (noyau 1), le mécanisme d'animation 3, les presseurs 2D et 2G et les mouvements de l'anneau 5. Cela permet d'exécuter le procédé général présenté en préambule. Soulignons en particulier que le procédé comporte une phase pendant laquelle le mouvement de l'anneau 5 suit la rotation de la forme et, ultérieurement, une autre phase pendant laquelle le mouvement de l'anneau 5 par rapport à la forme est en sens opposé par rapport à la rotation de la forme. Soulignons aussi que le procédé comporte une phase pendant laquelle l'anneau 5 se rapproche de la forme dans un mouvement parallèle à l'axe de rotation de la forme, et ultérieurement une phase pendant laquelle il s'éloigne de la forme dans un mouvement parallèle à l'axe de rotation de la forme. La phase des mouvements de l'anneau 5 par rapport au mouvement de la forme est de préférence telle qu'une des lèvres 53 soit disposée de façon adjacente au tronçon 40 de fil 4 précédemment déposée. L'épaisseur de la lèvre 53 détermine avantageusement l'écart entre tronçons 40 de fils adjacents après dépose sur la forme.

L'application illustrant l'invention vise à fabriquer une carcasse radiale. Il s'agit donc d'ancrer des arceaux dans chaque bourrelet du futur pneumatique, et il s'agit de réaliser une dépose aussi précise que possible dans les flancs du futur pneumatique. D'où l'orientation bien particulière de la fente 54 (et du plan de mouvement). Cependant, d'autres orientations peuvent être envisagées.

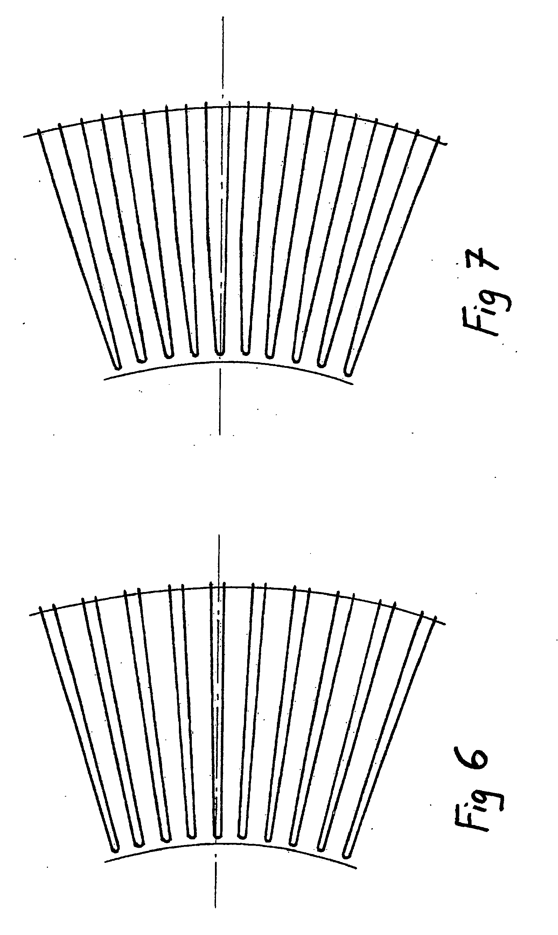

A la figure 6, on a visualisé l'allure des différents arceaux de fil 4 déposés sur la forme avec un système d'animation de l'organe de dépose donné, mais sans l'utilisation de l'anneau de guidage 5 selon l'invention. A la figure 7, on a représenté le résultat obtenu avec le même système d'animation de l'organe de dépose et avec l'intervention de l'anneau de guidage 5 selon l'invention. On voit qu'à la figure 7 l'écart entre les différents allers et retours du fil, c'est à dire l'écart entre les arceaux adjacents, est régulier et constant dans la zone d'intervention de l'anneau 5 (partie haute du flanc), alors qu'à la figure 6, les différents arceaux de fil 4 restent groupés deux par deux.

## Revendications

1. Appareil de fabrication d'un renforcement pour pneumatique, ledit appareil étant destiné à fabriquer un renforcement constitué à partir d'un fil (4), ledit appareil étant destiné à être utilisé en coopération avec une forme sensiblement toroïdale (1), rotative autour d'un axe de rotation, ayant un plan sensiblement médian perpendiculaire audit axe de rotation, sur laquelle on construit progressivement ledit renforcement en déposant des arceaux dudit fil selon une trajectoire souhaitée pour ledit fil à la surface de ladite forme, ledit appareil comprenant :
• un organe de dépose (6) du fil dans lequel le fil peut coulisser ;
• un mécanisme d'animation (3) pour transporter ledit organe de dépose selon un mouvement cyclique sensiblement compris dans un plan de mouvement, en va-et-vient, le mouvement cyclique contournant un espace central destiné à accueillir ladite forme, le mouvement amenant l'organe de dépose en cycles successifs au voisinage de chacune des extrémités souhaitées pour le fil dans ladite trajectoire, le mécanisme d'animation comportant au moins un bras principal (31) supportant ledit organe de dépose ;
• des presseurs (2^{G} et 2^{D}) proches de chaque extrémité de ladite trajectoire, pour appliquer le fil sur la forme au moins auxdites extrémités ;
**caractérisé en ce qu'**il comprend au moins une paire de déflecteurs (52) disposés en vis à vis, les déflecteurs étant chacun terminé par une lèvre, les lèvres délimitant une fente (54), ladite au moins une paire de déflecteurs coopérant avec un seul côté, axialement, de ladite forme, les déflecteurs étant disposées de façon à pouvoir recevoir le fil amené par l'organe de dépose (6) du côté opposé à l'espace central et le guider d'un côté de ladite forme selon une trajectoire définie par le contour des lèvres et le laisser passer entre les lèvres et vers l'espace central.

2. Appareil selon la revendication 1, dans lequel un anneau de guidage (5) est positionné et orienté par rapport au bras principal de façon à ce que celui-ci traverse l'anneau au cours de son mouvement cyclique, l'anneau (5) comportant une base (50), deux parois latérales (51) solidaires de ladite base et disposées de part et d'autre de celle-ci, les déflecteurs (52) étant chacun solidaire de l'une des parois latérales et étant chacun disposé à l'extrémité de celle-ci opposée à la base.

3. Appareil selon la revendication 1 ou 2, dans lequel la paire de déflecteurs (52) est supporté par un mécanisme de positionnement.

4. Appareil selon l'une des revendications 1 ou 2, comportant deux paires de déflecteurs coopérant avec chacune un seul côté, axialement, de ladite forme, et dans lequel chacune des paires de déflecteurs est supportée par son propre mécanisme de positionnement.

5. Appareil selon l'une des revendications 1 à 4, dans lequel chacun des déflecteurs est disposé radialement au delà de l'équateur et axialement d'un côté dudit plan médian de la forme avec laquelle il est destiné à coopérer.

6. Appareil selon l'une des revendications 1 à 5, dans lequel chacun des déflecteurs est disposé en regard des épaules de la forme avec laquelle il est destiné à coopérer.

7. Appareil selon l'une des revendications 1 à 6, dans lequel chacune des lèvres est sensiblement comprise dans un plan et présente une allure parallèle à la surface de la forme, considérée au niveau correspondant au flanc du futur pneu.

8. Appareil selon la revendication 2, dans lequel la base (50) est reliée à un premier vérin (71) capable d'imprimer une translation perpendiculaire auxdites lèvres et perpendiculaire au plan de mouvement.

9. Appareil selon la revendication 2, dans lequel la base (50) est montée sur un support (7) formé par quatre parois planes flexibles montées en quadrilatère, en ce que le support est relié à un premier vérin (71) capable d'imprimer une translation perpendiculaire auxdites lèvres et perpendiculaire au plan de mouvement, et en ce que le support est relié à un second vérin (72) capable d'imprimer une translation perpendiculaire auxdites lèvres et parallèle au plan de mouvement.

10. Appareil selon l'une des revendications 8 ou 9, dans lequel le mouvement de chaque vérin est commandé par une came (81, 82).

11. Appareil selon l'une des revendications 8 à 10, dans lequel l'anneau est monté sur un support (7) formé essentiellement de parois planes flexibles (70) montées en quadrilatère.

12. Appareil selon l'une des revendications 1 à 11, dans lequel le bras principal (31) supporte directement l'organe de dépose (6).

13. Appareil selon l'une des revendications 1 à 12, dans lequel l'organe de dépose est un oeilleton (60).

14. Appareil selon l'une des revendications 1 à 13, utilisé avec une forme et avec un système de motorisation commandant en synchronisme la rotation de la forme, le mécanisme d'animation, les presseurs, et les mouvements de l'anneau.

15. Procédé de fabrication d'un renforcement pour pneumatique, à partir d'un fil délivré en continu et à la demande par un distributeur de fil approprié, utilisant une forme de révolution ayant un axe de rotation et sur laquelle on construit progressivement ledit renforcement, comprenant une étape permettant de déposer sur la forme une couche de caoutchouc cru au moins dans les zones d'ancrage d'extrémités dudit renforcement, et dans lequel on anime la forme d'une rotation à vitesse toujours non nulle et, le fil provenant du distributeur étant enfilé dans un organe de dépose, en synchronisme avec la rotation de la forme, on fait décrire à l'organe de dépose dans lequel le fil est enfilé un mouvement alterné de va-et-vient contournant la forme de façon à poser progressivement le fil sur la forme, le mouvement alterné de va-et-vient faisant, dans une phase du mouvement allant vers la zone d'ancrage à la base dudit flanc, passer l'organe de dépose par devant un dispositif de guidage comportant deux déflecteurs adjacents séparés par une fente, le dispositif de guidage étant disposé en regard d'au moins une épaule, le fil passant au travers de la fente et étant temporairement pressé contre la forme dans ladite zone d'ancrage, le mouvement alterné de va-et-vient faisant passer à nouveau l'organe par devant le dispositif de guidage dans une phase du mouvement revenant depuis ladite zone d'ancrage, le fil passant au travers de la fente après chaque passage, le dispositif de guidage étant déplacé circonférentiellement en synchronisme avec la rotation de la forme afin de maîtriser la trajectoire finale que fait le fil une fois déposé sur ladite forme, et on répète les mouvements indiqués ci-dessus jusqu'à déposer le nombre voulu de tronçons à la surface de la forme, selon la trajectoire souhaitée pour le fil à la surface de la forme.

16. Procédé selon la revendication 15, utilisant un anneau comportant une base, deux parois latérales solidaires de ladite base et disposées de part et d'autre de celle-ci, les déflecteurs étant chacun solidaire de l'une des parois latérales et étant disposé à l'extrémité de celle-ci opposée à la base, dans lequel le mouvement alterné de va-et-vient fait passer l'organe de dépose au travers dudit anneau de guidage.

17. Procédé selon la revendication 15 ou 16 dans lequel le mouvement des déflecteurs comporte une phase pendant laquelle il suit la rotation de la forme et une phase pendant laquelle il se déplace circonférentiellement par rapport à la forme en sens opposé par rapport à la rotation de la forme.

18. Procédé selon la revendication 15 ou 16, dans lequel le mouvement des déflecteurs comporte une phase pendant laquelle il se rapproche de la forme dans un mouvement parallèle à l'axe de rotation de la forme de façon à ce qu'une des lèvres soit adjacente au fil précédemment déposé et détermine par son épaisseur l'écart entre fils adjacents après dépose sur la forme, et une phase pendant laquelle il s'éloigne de la forme dans un mouvement parallèle à l'axe de rotation de la forme.

19. Procédé selon l'une des revendications 15 à 18 dans lequel, au moyen d'un presseur approprié, on forme une boucle avec le fil et on plaque la boucle contre la forme à chaque extrémité de la trajectoire finale.

## Claims

1. Apparatus for manufacturing a tyre reinforcement, which apparatus is intended to manufacture a reinforcement formed from a cord (4), the apparatus being intended to be used in cooperation with a substantially toroidal mould (1) which rotates about an axis of rotation, having a substantially median plane perpendicular to the axis of rotation, on which mould the reinforcement is built up by depositing hoops of the said cord along a desired trajectory for the cord on the surface of the mould, the apparatus comprising:
• a cord depositing element (6) through which the cord can pass;
• a drive mechanism (3) for transporting the depositing element in a cyclical motion substantially within a plane of motion in a reciprocating manner, the cyclical motion turning about a central space intended to receive the mould, the motion bringing the depositing element in consecutive circles into the vicinity of each of the ends desired for the cord in the trajectory, the drive mechanism comprising at least one main arm (31) supporting the depositing element;
• pressers (2G and 2D) close to each end of the trajectory in order to apply the cord to the mould at least at the said ends;
**characterised in that** it comprises at least one pair of deflectors (52) disposed opposite one another, the deflectors each ending with a lip, the lips defining a slot (54), the said at least one pair of deflectors concerning only one side, axially, of the mould, the deflectors being disposed so as to receive the cord brought by the depositing element (6) on the opposite side to the central space and to guide it on one side of the mould in a trajectory defined by the contour of the lips and to allow it to pass between the lips and towards the central space.

2. Apparatus according to claim 1, wherein a guide ring (5) is positioned and oriented relative to the main arm so that the said arm passes through the ring during its cyclical movement, the ring (5) comprising a base (50), two lateral partition walls (51) rigidly connected to the base and disposed on either side thereof, deflectors (52) being each rigidly connected to one of the lateral partition walls and each being disposed at the end thereof which is opposite to the base.

3. Apparatus according to claim 1 or 2, wherein the pair of deflectors (52) is supported by a positioning mechanism.

4. Apparatus according to either of claims 1 or 2, comprising two pairs of deflectors, each allocated to only one side, axially, of the mould, and wherein each pair of deflectors is supported by its own positioning mechanism.

5. Apparatus according to one of claims 1 to 4, wherein each deflector is disposed radially beyond the equator and axially on one side of the median plane of the mould with which it is intended to cooperate.

6. Apparatus according to one of claims 1 to 5, wherein each deflector is disposed opposite the shoulders of the mould with which it is intended to cooperate.

7. Apparatus according to one of claims 1 to 6, wherein each of the lips is substantially contained within one plane and has a contour parallel to the surface of the mould considered at the level corresponding to the sidewall of the prospective tyre.

8. Apparatus according to claim 2, wherein the base (50) is connected to a first jack (71) capable of imposing translation perpendicular to the lips and perpendicular to the plane of motion.

9. Apparatus according to claim 2, wherein the base (50) is mounted on a support (7) formed by four plane, flexible partition walls arranged in a quadrilateral, in that the support is connected to a first jack (71) capable of imposing translation perpendicular to the lips and to the plane of motion, and in that the support is connected to a second jack (72) capable of imposing translation perpendicular to the lips and to the plane of motion.

10. Apparatus according to either of claims 8 or 9, wherein the movement of each jack is controlled by a cam (81, 82).

11. Apparatus according to one of claims 8 to 10, wherein the ring is mounted on a support (7) formed substantially of plane, flexible partition walls (70) mounted in a quadrilateral.

12. Apparatus according to one of claims 1 to 11, wherein the main arm (31) directly supports the depositing element (6).

13. Apparatus according to one of claims 1 to 12, wherein the depositing element is an eyelet (60).

14. Apparatus according to one of claims 1 to 13, used with a mould and a motorisation system synchronously controlling the rotation of the mould, the drive mechanism, the pressers, and the movements of the ring.

15. Method of manufacturing a reinforcement for a tyre from a cord supplied continuously and upon demand by a suitable cord distributor, using a revolving mould which has an axis of rotation and on which the reinforcement is built up gradually, comprising a stage for depositing on the mould a layer of uncured rubber at least in the regions for anchoring the ends of the reinforcement, and in which the mould is driven in rotation at a speed which is always non-zero, the cord proceeding from the distributor being threaded in a depositing element, synchronously with rotation of the mould, and the depositing element in which the cord is threaded is made to describe a reciprocating movement around the mould so as to deposit the cord gradually on the mould, the reciprocating movement making the depositing element pass - in a phase of movement towards the anchoring region at the foot of the sidewall - in front of a guide device comprising two adjacent deflectors separated by a slot, the guide device being disposed opposite at least one shoulder, the cord passing through the slot and being temporarily pressed against the mould in the anchoring region, the reciprocating movement making the element pass again in front of the guide device in a phase of movement returning from the anchoring region, the cord passing through the slot after each passage, the guide device being moved circumferentially and synchronously with the rotation of the mould in order to control the final trajectory which the cord follows once deposited on the mould, and the movements indicated above are repeated until the desired number of sections are deposited on the mould surface according to the trajectory desired for the cord on the mould surface.

16. Method according to claim 15, using a ring having a base, two lateral partition walls which are rigidly connected to the base and which are disposed on either side thereof, the deflectors being each rigidly connected to one of the lateral partition walls and being disposed at the end thereof opposite the base, wherein the reciprocating movement makes the depositing element pass through the guide ring.

17. Method according to claim 15 or 16, wherein the movement of the deflectors comprises a phase in which it follows the rotation of the mould and a phase in which it moves circumferentially relative to the mould in the opposite direction to the rotation of the mould.

18. Method according to claim 15 or 16, wherein the movement of the deflectors comprises a phase in which it moves towards the mould in a movement parallel to the axis of rotation of the mould, in such a manner that one of the lips is adjacent to the cord previously deposited and determines by its thickness the spacing between adjacent cords after deposition on the mould, and a phase in which it moves away from the mould in a movement parallel to the axis of rotation of the mould.

19. Method according to one of claims 15 to 18, wherein, by means of a suitable presser, a loop is formed with the cord and the loop is pressed against the mould at each end of the final trajectory.

## Patentansprüche

1. Vorrichtung zur Herstellung einer Verstärkung für Luftreifen, wobei die Vorrichtung für die Herstellung einer Verstärkung ausgehend von einem Draht (4) vorgesehen ist, wobei die Vorrichtung dafür vorgesehen ist, im Zusammenwirken mit einer in etwa toroidalen Form (1) verwendet zu werden, die drehbar um eine Drehachse ist, die eine in etwa mediane Ebene senkrecht zu dieser Drehachse aufweist, auf der die Verstärkung nach und nach konstruiert wird, indem kleine Bögen des Drahtes entlang einer Trajektorie, die für den Draht gewünscht wird, auf der Oberfläche dieser Form abgelegt werden, wobei die Vorrichtung umfasst:
• eine Ablegeinrichtung (6) zum Ablegen des Drahtes, in der der Draht gleiten kann;
• einen Bewegungsmechanismus (3), um die Ablegeinrichtung in einer zyklischen Bewegung, die in etwa in einer Bewegungsebene liegt, hin und her zu transportieren, wobei die zyklische Bewegung einen zentralen Raum umfährt, der dafür vorgesehen ist, die Form aufzunehmen, wobei die Bewegung die Ablegeinrichtung in aufeinanderfolgenden Zyklen in die Nähe aller Endpunkte führt, die für den Draht in der Trajektorie gewünscht werden, wobei der Bewegungsmechanismus mindestens einen Hauptarm (31) aufweist, der die Ablegeinrichtung trägt;
• Pressfinger (2^{G} und 2^{D}) nahe bei den Endpunkten der Trajektorie, um den Draht mindestens an den Endpunkten auf die Form zu drücken;
**dadurch gekennzeichnet, dass** sie mindestens ein Paar Ablenker (52) umfasst, die einander gegenüberliegend angeordnet sind, wobei jeder Ablenker durch eine Lippe begrenzt wird, wobei die Lippen einen Spalt (54) abgrenzen, wobei das mindestens eine Paar von Ablenkern mit einer einzigen Seite, in axialer Richtung, der Form zusammenwirkt, wobei die Ablenker so angeordnet sind, dass sie den Draht aufnehmen können, der durch die Ablenkeinrichtung (6) über die Seite zugeführt wird, die dem zentralen Raum gegenüberliegt, und dass sie ihn von einer Seite der Form entlang einer definierten Trajektorie führen können, die durch die Kontur der Lippen definiert ist, und dass sie ihn zwischen den Lippen und in Richtung des zentralen Raums hindurchtreten lassen.

2. Vorrichtung nach Anspruch 1, in der ein Führungsring (5) bezogen auf den Hauptarm so positioniert und orientiert ist, dass dieser Hauptarm während seiner zyklischen Bewegung durch den Ring hindurch fährt, wobei der Ring (5) eine Basis (50), zwei fest mit dieser Basis verbundene Seitenwände (51), die auf den beiden Seiten der Basis angeordnet sind, aufweist, wobei je ein Ablenker (52) fest mit einer Seitenwand verbunden ist und am Ende dieser Seitenwand der Basis gegenüber liegend angeordnet ist.

3. Vorrichtung nach Anspruch 1 oder 2, in der das Paar Ablenker (53) von einem Positioniermechanismus getragen wird.

4. Vorrichtung nach einem der Ansprüche 1 oder 2, die zwei Paare Ablenker aufweist, von denen jedes Paar mit nur einer Seite der Form, bezogen auf die axiale Richtung, zusammenwirkt, und in der jedes Paar Ablenker von seinem eigenen Positioniermechanismus getragen wird.

5. Vorrichtung nach einem der Ansprüche 1 bis 4, wobei jeder Ablenker in radialer Richtung außerhalb des Äquators und in axialer Richtung auf einer Seite der medianen Ebene der Form, mit der er zusammenwirken soll, angeordnet ist.

6. Vorrichtung nach einem der Ansprüche 1 bis 5, wobei jeder Ablenker den Schultern der Form, mit der er zusammenwirken soll, gegenüberliegend angeordnet ist.

7. Vorrichtung nach einem der Ansprüche 1 bis 6, wobei alle Lippen in etwa in einer Ebene liegen und einen Verlauf parallel zur Oberfläche der Form aufweist, betrachtet auf der Höhe, die der Seitenwand des entstehenden Reifens entspricht.

8. Vorrichtung nach Anspruch 2, wobei die Basis (50) mit einem ersten Stellantrieb (71) verbunden ist, der imstande ist, für eine Translation senkrecht zu den Lippen und senkrecht zur Bewegungsebene zu sorgen.

9. Vorrichtung nach Anspruch 2, wobei die Basis (50) auf einem Träger (7) montiert ist, der aus vier flexiblen und ebenen Wänden gebildet ist, die im Viereck angeordnet sind, wobei der Träger mit einem ersten Stellantrieb (71) verbunden ist, der imstande ist, für eine Translation senkrecht zu den Lippen und senkrecht zur Bewegungsebene zu sorgen, und wobei der Träger mit einem zweiten Stellantrieb (72) verbunden ist, der imstande ist, für eine Translation senkrecht zu den Lippen und parallel zur Bewegungsebene zu sorgen.

10. Vorrichtung nach einem der Ansprüche 8 oder 9, wobei die Bewegung jedes Stellantriebs durch eine Nocke (81, 82) gesteuert wird.

11. Vorrichtung nach einem der Ansprüche 8 bis 10, wobei der Ring auf einem Träger (7) montiert ist, der im Wesentlichen aus flexiblen ebenen Wänden (70) gebildet ist, die im Viereck montiert sind.

12. Vorrichtung nach einem der Ansprüche 1 bis 11, wobei der Hauptarm (31) die Ablegeinrichtung (6) unmittelbar trägt.

13. Vorrichtung nach einem der Ansprüche 1 bis 12, wobei die Ablegeinrichtung eine ringförmige Kimme (60) ist.

14. Vorrichtung nach einem der Ansprüche 1 bis 13, die mit einer Form und einem Motorisierungssystem verwendet wird, das die Drehung der Form, den Bewegungsmechanismus, die Pressfinger und die Bewegungen des Rings synchron steuert.

15. Verfahren zur Herstellung einer Verstärkung für Luftreifen ausgehend von einem Draht, der kontinuierlich und auf Bedarf von einem geeigneten Drahtverteiler bereitgestellt wird, bei dem eine Rotationsform verwendet wird, die eine Drehachse aufweist und auf der nach und nach die Verstärkung konstruiert wird, das einen Schritt umfasst, der das Aufbringen einer Schicht aus unvulkanisiertem Kautschuk auf die Form mindestens in den Verankerungsbereichen der Enden der Verstärkung ermöglicht, und in dem die Form mit einer ständig von Null verschiedenen Geschwindigkeit in eine Drehung versetzt wird, und wobei der Draht, der aus dem Verteiler stammt, in eine Ablegeinrichtung eingefädelt wird, synchron mit der Drehung der Form, und bei dem man die Ablegeinrichtung, in die der Draht eingefädelt wird, eine wechselnde Hin- und Herbewegung beschreiben lässt, mit der die Form so umfahren wird, dass der Draht nach und nach auf die Form gelegt wird, wobei die abwechselnde Hin- und Herbewegung in einer Phase der Hinbewegung in Richtung der Verankerungszone an der Basis der Flanke die Ablegeinrichtung in Gegenwart einer Führungsvorrichtung passieren lässt, die zwei benachbarte Ablenker aufweist, die durch einen Spalt voneinander getrennt sind, wobei die Führungsvorrichtung gegenüber mindestens einer Schulter angeordnet ist, wobei der Draht durch den Spalt austritt und in der Verankerungszone vorläufig gegen die Form gepresst wird, wobei die abwechselnde Hin- und Herbewegung in einer Phase der Rückbewegung weg von der erwähnten Verankerungszone die Ablegeinrichtung erneut in Gegenwart der Führungseinrichtung passieren lässt, wobei der Draht nach jedem Passieren aus den Spalt heraustritt, wobei die Führungsvorrichtung synchron mit der Drehung der Form verschoben wird, um die abschließend erhaltene Trajektorie zu beherrschen, die der Draht einnimmt, sobald er auf der Form abgelegt ist, und wobei die oben angegebenen Bewegungen wiederholt werden, bis die gewünschte Zahl von Drahtstücken auf der Oberfläche der Form entlang der für den Draht auf der Oberfläche der Form gewünschten Trajektorie abgelegt ist.

16. Verfahren nach Anspruch 15, bei dem ein Ring verwendet wird, der eine Basis, zwei fest mit der Basis verbundene Seitenwände umfasst, die zu beiden Seiten der Basis angeordnet sind, wobei jeder Ablenker fest mit einer der Seitenwände verbunden ist und am Ende der Seitenwand der Basis gegenüberliegend angeordnet ist, bei dem die abwechselnde Hin- und Herbewegung die Ablegeinrichtung durch den Führungsring passieren lässt.

17. Verfahren nach Anspruch 15 oder 16, bei dem die Bewegung der Ablenker eine Phase umfasst, während der sie der Drehung der Form folgt, und eine Phase, während der sie sich in Umfangsrichtung verschiebt, bezogen auf die Form, in entgegengesetzter Richtung, bezogen auf die Drehung der Form.

18. Verfahren nach Anspruch 15 oder 16, bei dem die Bewegung der Ablenker eine Phase umfasst, in der er sich der Form in einer Bewegung parallel zur Drehachse der Form annähert, damit eine der Lippen benachbart zu dem zuvor abgelegten Draht ist und durch seine Dicke den Abstand zwischen benachbarten Drähten nach dem Ablegen auf der Form festlegt, und eine Phase, in der er sich in einer Bewegung parallel zur Drehachse der Form von der Form entfernt.

19. Verfahren nach einem der Ansprüche 15 bis 18, bei dem mit Hilfe eines geeigneten Pressfingers eine Schlaufe mit dem Draht gebildet wird und die Schlaufe an jedem Ende der abschließend erhaltenen Trajektorie gegen die Form plattiert wird.
